Europäisches Patentamt

European Patent Office

Office européen des brevets

(19)

(11) Numéro de publication : **0 028 977**
**B1**

(12)

# FASCICULE DE BREVET EUROPÉEN

(45) Date de publication du fascicule du brevet :
**14.09.83**

(51) Int. Cl.³ : **B 60 Q   1/14**

(21) Numéro de dépôt : **80401583.2**

(22) Date de dépôt : **05.11.80**

(54) **Dispositif de commande automatique de l'allumage et de l'extinction des feux d'un véhicule.**

(30) Priorité : **07.11.79 FR 7927461**
**23.10.80 FR 8022699**

(43) Date de publication de la demande :
**20.05.81 Bulletin 81/20**

(45) Mention de la délivrance du brevet :
**14.09.83 Bulletin 83/37**

(84) Etats contractants désignés :
**GB IT SE**

(56) Documents cités :
**DE A 2 145 857**
**DE A 2 329 050**
**FR A 2 311 687**
**US A 2 825 851**
**US A 2 965 798**

(73) Titulaire : **Massoni, François**
**95 Avenue de la Lanterne**
**F-06200 Nice (FR)**

**Canarelli, Filippe**
**Via Garibaldi No 24**
**Vintimille (IT)**

**Fellrath, Françoise**
**4 Avenue Primerose**
**F-06200 Nice (FR)**

(72) Inventeur : **Massoni, François**
**95 Avenue de la Lanterne**
**F-06200 Nice (FR)**
Inventeur : **Canarelli, Filippe**
**Via Garibaldi No 24**
**Vintimille (IT)**
Inventeur : **Fellrath, Françoise**
**4 Avenue Primerose**
**F-06200 Nice (FR)**

(74) Mandataire : **Rinuy, Guy et al**
**Cabinet Rinuy et Santarelli 14, Avenue de la Grande Armée**
**F-75017 Paris (FR)**

# Dispositif de commande automatique de l'allumage et de l'extinction des feux d'un véhicule

L'invention concerne un dispositif de commande automatique de l'allumage et de l'extinction des feux d'un véhicule.

Ce dispositif est destiné à permettre le passage automatique d'un état à l'autre du système d'éclairage du véhicule en fonction des conditions de luminosité. Pour une voiture automobile par exemple il permet de passer automatiquement dans un état dans lequel tous les feux sont éteints, ou dans des états dans lesquels les feux de position, les feux de croisement ou les feux de route respectivement sont éclairés, sans que le conducteur ait à effectuer aucune manœuvre. Par ailleurs, ce dispositif est actionné dès que la clé de contact du véhicule est actionnée.

Un commutateur électronique de commande automatique phares-codes présentant les caractéristiques mentionnées dans le préambule de la revendication 1 est décrit dans le brevet FR-A-2 311 687. Ce commutateur présente de nombreux inconvénients. L'un des inconvénients du commutateur antérieur est dû au fait que sa mise en marche n'est pas totalement automatique. En effet, ce commutateur ne commande que le passage phares-codes et réciproquement mais le conducteur doit tout d'abord effectuer manuellement le passage en feux de position, puis en feux de croisement, (« lors de l'utilisation en commande automatique, le commutateur normal sera laissé sur la position code ») et, ensuite, actionner l'inverseur manuel-automatique. Ainsi, ni sa mise en route ni son arrêt ne sont automatiques. Ceci présente un inconvénient grave dans le cas où le conducteur oublierait d'arrêter le dispositif car les feux continuant à fonctionner, la batterie risquerait de se retrouver inutilisable.

Le dispositif dont les caractéristiques sont définies dans la partie caractérisante de la revendication 1 permet de supprimer toute intervention manuelle du conducteur, l'actionnement des feux étant totalement automatique et fonctionnant dès la mise en route du moteur du véhicule. Cependant, afin d'éviter une décharge trop importante de la batterie du véhicule lors du démarrage, il peut être prévu d'empêcher l'éclairage des feux de croisement et de route pendant le temps nécessaire au démarrage du véhicule.

Avec ce dispositif, il est toujours possible d'utiliser la commande totalement manuelle, par exemple en cas de défaillance du dispositif automatique, cette commande manuelle restant connectée en parallèle sur la commande automatique et étant prioritaire par rapport à celle-ci.

Dans le mode de fonctionnement semi-manuel, lorsque le commutateur de la commande manuelle est sur la position correspondant aux feux de croisement ou de route, la commande manuelle étant cependant en position d'extinction, les feux de croisement ou de route s'allument à condition que la luminosité soit suffisamment faible pour commander l'allumage automatique des feux de position.

Selon l'une des caractéristiques de la revendication 1, le dispositif automatique comporte au moins trois organes photosensibles, par exemple des cellules photo-électriques, reliées à trois circuits de commande eux-mêmes reliés, par l'intermédiaire d'un circuit logique de commande, à trois relais. Ces relais sont respectivement associés à un contact qui relie les feux de position, de croisement ou de route à la batterie du véhicule lorsque la luminosité est inférieure à une valeur prédéterminée, différente pour chacun d'eux. Selon une autre caractéristique de l'invention, le circuit logique de commande doit, d'une part, transmettre les signaux des circuits de commande aux relais, d'autre part, empêcher tout allumage simultané des feux de croisement et des feux de route, et enfin tenir compte en priorité de la commande manuelle.

Pour éviter des commutations répétées dues à de faibles variations de luminosité lorsque celle-ci est proche d'une valeur à laquelle une commutation doit se faire, l'invention prévoit de remplacer cette valeur unique par deux seuils. Ainsi les feux s'allument lorsque la luminosité descend au-dessous d'un premier seuil et s'éteignent lorsque la luminosité remonte au-dessus d'un second seuil, supérieur au premier. Bien entendu ces seuils sont différents pour les feux de position, de croisement et de route.

Pour éviter une certaine lacune de fonctionnement du dispositif automatique lorsque le véhicule rencontre des sources lumineuses parasites comme par exemple des fenêtres éclairées ou des surfaces réfléchissantes comme des murs blancs, des rails de protection dans des virages, des catadioptres, des panneaux formant réflecteurs, etc., conditions dans lesquelles il aurait tendance à répondre à ces intensités lumineuses reçues par des changements instantanés phares-codes et vice versa provoquant un clignotement intempestif et gênant pour le conducteur, on combine au circuit de commande automatique des phares, un système de contrôle de lumière réfléchie. Ce dernier comprend : un émetteur de radiations de préférence non visibles, comme des radiations infrarouges, qui sont modulées, tant en fréquence qu'en amplitude ; et un récepteur sensible uniquement aux radiations de l'émetteur qui sont réfléchies par les obstacles qui se présentent au fur et à mesure du déplacement du véhicule.

Le récepteur est agencé pour délivrer un signal, par exemple une tension, fonction de la quantité de radiations réfléchies, lequel est appliqué, par l'intermédiaire d'une entrée résistance-diode, au dispositif de commande automatique afin de faire varier, aussi longtemps qu'il est possible, la tension de référence du comparateur déterminant les seuils d'allumage et d'extinction des phares.

Grâce à ce système de contrôle de lumière réfléchie, le phénomène de clignotement intempestif phare-code dû à la réflexion de la lumière générée par les propres phares du véhicule et interprétée par l'organe photosensible comme celle d'un véhicule venant en sens inverse est totalement éliminé.

L'invention sera décrite plus en détail en regard des dessins annexés représentant, à titre d'exemple nullement limitatif, une forme de réalisation possible de ladite invention.

Sur ces dessins :

la figure 1 représente schématiquement le dispositif automatique selon l'invention ;

la figure 2 représente un mode de réalisation préférentiel d'un circuit d'alimentation du dispositif selon l'invention ;

les figures 3 et 4 représentent des circuits permettant, en association avec le dispositif selon l'invention, de bloquer les feux de route et de croisement lors du démarrage du véhicule ; et

la figure 5 est un schéma à plus grande échelle du circuit de commande des feux de route, sur lequel a été aménagé un dispositif de contrôle de la lumière réfléchie, lequel permet d'éliminer totalement tout changement instantané intempestif phare-code et vice versa.

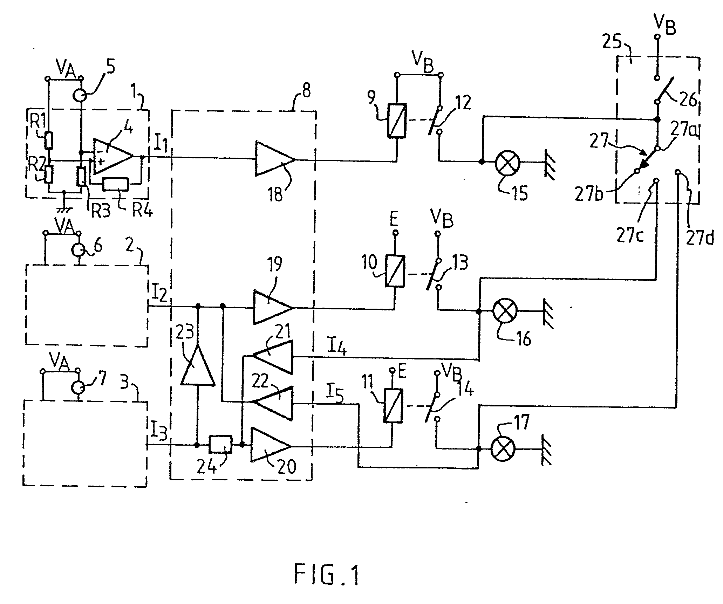

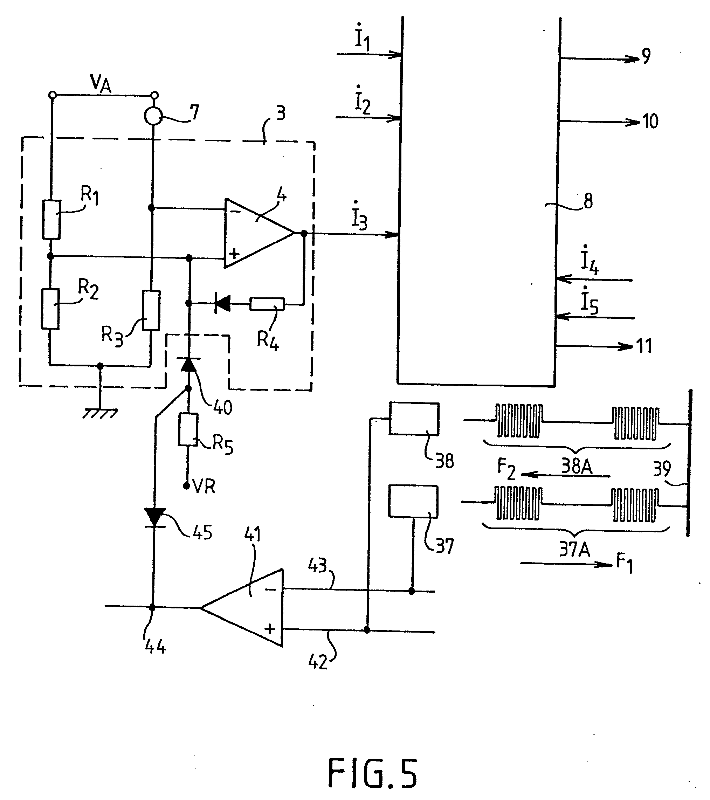

Comme représenté sur la figure 1, le dispositif selon l'invention compte trois circuits de commande 1, 2 et 3, destinés respectivement à commander l'allumage des feux de position, de croisement et de route. Ces trois circuits sont identiques, et seul le circuit 1 est représenté en détail sur la figure 1. Comme on le verra en détail plus loin, le circuit 3 est représenté à plus grande échelle sur la figure 5.

Chacun des circuits de commande est essentiellement constitué par un amplificateur opérationnel 4, ayant une impédance d'entrée élevée, dont la sortie constitue la sortie du circuit de commande. La haute impédance d'entrée des circuits de commande permet, en combinaison avec des cellules photo-électriques spéciales ayant une grande rapidité même lorsque la luminosité est faible et ayant une résistance résiduelle élevée dans l'obscurité, d'obtenir un fonctionnement correct du dispositif sans aucune lentille de concentration ou de focalisation de la lumière.

L'entrée non inverseuse de l'amplificateur opérationnel 4 est reliée, d'une part, à la tension d'alimentation $V_A$ par une résistance R1 et, d'autre part, à la masse par une résistance R2. Son entrée inverseuse est reliée à la masse par une résistance R3 et à la tension d'alimentation $V_A$ par une cellule photo-électrique, ou tout composant analogue 5 pour le circuit 1, 6 et 7, respectivement, pour les circuits 2 et 3. Ainsi l'amplificateur opérationnel 4 de chacun des circuits de commande compare la tension qui est appliquée à son entrée inverseuse, et qui est fonction de la luminosité, à une tension de référence appliquée à son entrée non inverseuse. Un tel circuit est un circuit comparateur classique dont la tension de sortie peut prendre deux valeurs logiques différentes. Une résistance R4 relie l'entrée non inverseuse de l'amplificateur opérationnel 4 à sa sortie. De cette manière la tension de référence appliquée à l'entrée non inverseuse prend deux valeurs différentes selon la valeur de la tension de sortie de l'amplificateur opérationnel 4.

Ainsi, lorsque la cellule photo-électrique est suffisamment éclairée et que les feux correspondants n'ont pas à être allumés, la sortie du circuit de commande correspondant est à un niveau bas, ou niveau « 0 », proche de la masse.

La tension de référence appliquée à l'entrée non inverseuse est alors déterminée par le diviseur de tension constitué par la résistance R1 et la résistance R2 sur laquelle la résistance R4 est montée en parallèle. Lorsque la tension appliquée à l'entrée inverseuse est inférieure à cette première valeur de la tension de référence, la sortie de l'amplificateur 4 passe au niveau « 1 », proche de la tension d'alimentation, commandant ainsi l'éclairage des feux associés à ce circuit de commande. La tension de référence appliquée à l'entrée non inverseuse est alors déterminée par un diviseur de tension constitué par la résistance R2 et par la résistance R1 sur laquelle la résistance R4 est montée en parallèle. Cette seconde valeur de la tension de référence est donc supérieure à la première. En conséquence, les signaux $I_1$, $I_2$, $I_3$ de commande des feux de position, de croisement et de route respectivement passent au niveau logique « 1 » lorsque la tension qui est appliquée par la cellule photo-électrique associée (5, 6 ou 7) à l'entrée non inverseuse du circuit de commande correspondant (1, 2 ou 3) devient inférieure à un premier seuil, et repasse au niveau logique « 0 » lorsque cette tension est supérieure à un second seuil supérieur au premier. L'existence de ces deux seuils de tension de référence pour chaque circuit de commande permet d'utiliser au mieux le dispositif de commande automatique de l'éclairage d'un véhicule. En effet, avec un seuil fixe de comparaison la moindre différence de luminosité (ombre, lampadaire, etc.) produirait un changement continuel des lumières (par exemple feux de croisement-feux de route et réciproquement) dès que l'on se trouve dans une ambiance dans laquelle la luminosité est proche de celle nécessaire pour l'allumage.

Les trois circuits 1, 2 et 3 se différencient les uns des autres par les valeurs des résistances R1 à R4 qui leur sont respectivement associées, les seuils de tension définis par ces résistances devant, dans un cas, correspondre à l'allumage des feux de position, dans un second cas à l'allumage des feux de croisement et dans le troisième cas à celui des feux de route.

On obtient ainsi en sortie des circuits 1, 2 et 3 des signaux de commande $I_1$, $I_2$ et $I_3$, respectivement.

Les signaux $I_1$, $I_2$ et $I_3$ sont appliqués à trois entrées d'un circuit logique 8 de commande de trois relais 9, 10 et 11 dont les contacts respectifs 12, 13 et 14 commandent, respectivement, l'éclairage des feux de position 15, de croisement 16 et de route 17. Ainsi que représenté sur la figure 1, les feux de position 15 sont reliés, d'une part, à la masse et, d'autre part, à la tension $V_B$ de la batterie par l'intermédiaire du contact 12 normalement ouvert, qui se ferme lorsque le relais 9 est excité par le circuit de commande 8. De même les feux de croisement 16 et de route 17 sont, respectivement, connectés entre la masse et la tension $V_B$ de la batterie par l'intermédiaire de contacts 13 et 14 qui se ferment lorsque les relais associés 10 et 11 sont excités. En fonctionnement totalement automatique du dispositif, le circuit logique de commande 8 doit permettre l'allumage des feux de position 15 dès que le signal $I_1$ de sortie du circuit de commande 1 est au niveau logique « 1 », l'allumage des feux de croisement 16 lorsque le signal $I_2$ est au niveau logique « 1 », le signal $I_3$ étant au niveau logique « 0 », et l'allumage des feux de route lorsque les signaux $I_1$ à $I_3$ sont au niveau « 1 ».

Dans le mode de réalisation préférentiel représenté sur la figure 1, le circuit logique 8 comporte un premier inverseur 18 dont l'entrée est connectée à la sortie du circuit 1 et reçoit donc le signal $I_1$. Le relais 9 est connecté entre la tension $V_B$ de la batterie et la sortie de cet inverseur 18. En conséquence, lorsque le signal $I_1$ est au niveau « 0 », la sortie de l'inverseur 18 est positive et le relais 9 n'est pas excité. Lorsque le signal $I_1$ passe au niveau « 1 », la sortie de l'inverseur 18 est au niveau bas et un courant peut circuler dans le relais 9, fermant le contact associé 12 et allumant les feux de position 15.

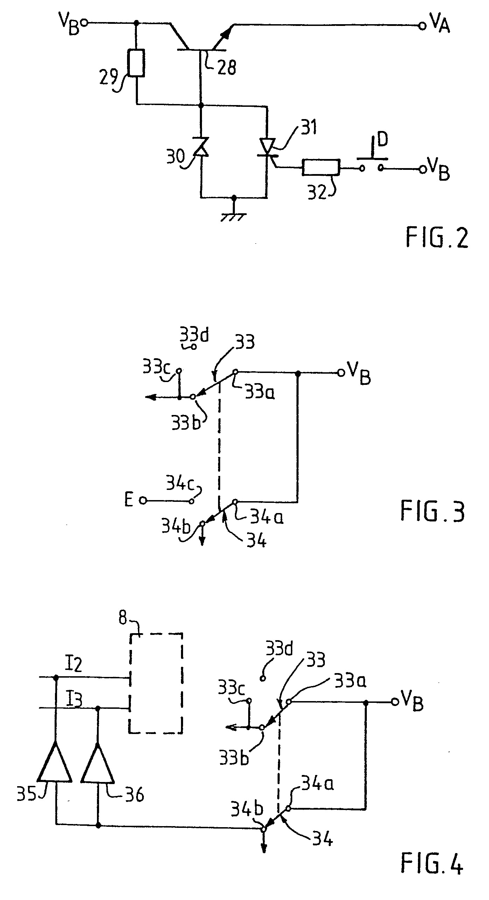

De la même manière des inverseurs 19 et 20 sont connectés, respectivement, entre les sorties des circuits 2 et 3 et les relais 10 et 11, ces relais étant par ailleurs reliés à la tension d'alimentation $V_B$ par l'intermédiaire d'une borne E dont la fonction sera décrite par la suite en regard de la figure 3.

Ainsi qu'indiqué plus haut, les feux de croisement et de route ne doivent pas être allumés simultanément. Pour cela le circuit logique de commande 8 comporte deux entrées supplémentaires recevant, respectivement, des signaux $I_4$ et $I_5$ et reliés, respectivement, aux feux de croisement 16 et de route 17. Le signal $I_4$ est appliqué à l'entrée d'un inverseur 21 dont la sortie est reliée à l'entrée de l'inverseur 20. De même, le signal $I_5$ est appliqué à l'entrée d'un inverseur 22 dont la sortie est reliée à l'entrée de l'inverseur 19. Par ailleurs, le circuit 8 comporte un inverseur 23 dont l'entrée est reliée à l'entrée de l'inverseur 20 par l'intermédiaire d'une résistance 24 et dont la sortie est reliée à l'entrée de l'inverseur 19.

De cette manière lorsque le signal $I_2$ est positif, le signal $I_3$ étant nul, la sortie de l'inverseur 19 est au niveau bas, ce qui excite le relais 10 et provoque l'allumage des feux de croisement 16. Le signal $I_4$ est alors au niveau « 1 » et, par l'intermédiaire de l'inverseur 21, amène au niveau « 0 » l'entrée de l'inverseur 20, ce qui empêche toute excitation du relais 11 et donc l'allumage des phares. Les signaux $I_3$ et $I_5$ étant à « 0 », les sorties des inverseurs 22 et 23 sont également positives.

Lorsque le signal $I_3$ devient positif, la sortie de l'inverseur 23 passe au niveau « 0 » et force à la masse l'entrée de l'inverseur 19, à condition bien sûr que l'amplificateur opérationnel du circuit 2 soit dimensionné de manière à pouvoir fournir un courant maximal inférieur au courant de saturation des inverseurs 23 et 22. Ceci empêche donc l'excitation du relais 10 et l'allumage des feux de croisement. Le signal $I_4$ repasse donc au niveau « 0 » et, par l'intermédiaire de l'inverseur 21, débloque le relais 11, ce qui permet l'allumage des feux de route 17. Simultanément, le signal $I_5$ passe au niveau 1 et, par l'intermédiaire de l'inverseur 22, force également l'entrée de l'inverseur 19 à la masse.

La résistance 24 est nécessaire pour permettre l'allumage des feux de route. En effet, en son absence, l'inverseur 21 ne permettrait pas le passage du signal $I_3$ au niveau « 1 ».

Le dispositif représenté sur la figure 1 autorise non seulement le fonctionnement totalement automatique décrit ci-dessus, mais également un fonctionnement semi-manuel.

Dans ce mode de fonctionnement, le levier manuel étant en position d'extinction, il est néanmoins prioritaire sur la commande automatique et commande, respectivement, l'allumage des feux de croisement ou de route lorsqu'il est en position feux de croisement ou feux de route, à condition que l'éclairement ambiant soit inférieur au seuil commandant l'allumage automatique des feux de position.

Pour cela le levier manuel 25 de commande de l'éclairage du véhicule est connecté en parallèle sur le dispositif automatique. Comme représenté ce levier manuel 25 se compose, d'une part, d'un interrupteur 26 et, d'autre part, d'un commutateur 27 à trois positions. Sur les voitures non munies d'un dispositif automatique d'éclairage ce levier manuel est connecté aux divers feux comme représenté sur la figure 1, et ce montage est conservé dans le dispositif selon l'invention. Une première borne du commutateur 26 est reliée à la tension $V_B$ de la batterie, tandis que son autre borne est reliée au contact commun 27a du commutateur 27. Ce contact 27a est relié aux feux de position 15. De cette manière les feux de position 15 sont allumés dès que l'interrupteur 26 est fermé. Le commutateur 27 comporte trois contacts 27b, 27c et 27d. Les contacts 27c et 27d sont, respectivement, reliés aux feux de croisement 16 et de route 17. Ainsi, en mode manuel normal, lorsque l'interrupteur 26 est fermé, les feux de position sont allumés et de plus, si le commutateur 27 est sur la position 27c les feux de croisement s'allument alors que si le commutateur 27 est sur la position 27d ce sont les feux de route qui s'allument.

En fonctionnement semi-manuel, l'interrupteur 26 reste ouvert. Tant que le commutateur 27 reste sur la position 27b, le fonctionnement du dispositif est totalement automatique. Si le commutateur 27 est mis manuellement sur la position 27c correspondant à l'allumage des feux de croisement, ceux-ci s'allument à condition néanmoins que l'éclairement ambiant soit inférieur au seuil nécessaire à l'allumage des feux de position. En effet dans ce cas, le signal $I_1$ passe au niveau « 1 » et entraîne la fermeture du contact 12, donc l'éclairage des feux de position. La borne 27a du commutateur, reliée à ces feux de position est donc alors connectée à la tension d'alimentation de la batterie $V_B$ par l'intermédiaire du contact 12 et, par l'intermédiaire du contact 27c, commande l'allumage des feux de croisement 16. Le signal $I_4$ passe alors au niveau « 1 » et par l'intermédiaire de l'inverseur 21 empêche tout allumage des feux de route, même si le signal $I_3$ passe à « 1 ». De même, lorsque le commutateur 27 est sur la position 27d, les feux de route 17 sont allumés et, par l'intermédiaire du signal $I_5$ et de l'inverseur 22, l'allumage des feux de croisement est bloqué. Ainsi en mode semi-manuel, le fonctionnement manuel est prioritaire sur le fonctionnement automatique en position feux de croisement et feux de route, à condition que les feux de position soient allumés automatiquement.

Le dispositif selon la figure 1 peut donc fonctionner selon trois modes différents :

— un mode manuel, l'interrupteur 26 étant fermé ;

— un mode totalement automatique, l'interrupteur 26 étant ouvert et le commutateur 27 sur la position 27b ;

— un mode semi-manuel, dans lequel l'interrupteur 26 étant ouvert, la commande manuelle est prioritaire sur la commande automatique et commande respectivement les feux de croisement ou de route, à condition que l'éclairement ambiant soit inférieur au seuil commandant l'éclairage automatique des feux de position.

Il est également possible dans le cas où le véhicule est équipé de feux anti-brouillard, de connecter ceux-ci au dispositif de commande automatique de manière que leur mise en service allume automatiquement les feux de croisement. On peut par exemple relier les feux anti-brouillard en parallèle sur l'entrée $I_2$, de manière à la faire passer au niveau « 1 » dès que l'interrupteur reliant les feux anti-brouillard à la tension de la batterie est fermé. Simultanément, ils peuvent être reliés par un inverseur à l'entrée de l'inverseur 20, ce qui bloque l'allumage des feux de route.

On peut également prévoir la possibilité de bloquer complètement le fonctionnement automatique du circuit. Ceci peut par exemple être réalisé grâce au circuit d'alimentation représenté sur la figure 2 qui fournit normalement la tension $V_A$ d'alimentation des circuits 1, 2 et 3 et des cellules photo-électriques 5, 6 et 7. Ce circuit d'alimentation est essentiellement constitué par un transistor 28 dont le collecteur est relié à la tension $V_B$ de la batterie et dont l'émetteur forme la sortie sur laquelle est présente la tension d'alimentation $V_A$. La base du transistor 28 est reliée par une résistance 29 à son collecteur et par une diode Zener 30 à la masse. Ce circuit fournit de manière connue une tension $V_A$ stabilisée, même pour des variations élevées de la tension $V_B$. Par exemple pour une tension $V_B$ de 12 V ces variations peuvent être de − 10 % à + 30 %, c'est-à-dire que $V_B$ peut varier de 11 à 16 V sans perturber le fonctionnement du circuit électronique de commande de l'éclairage. Pour permettre le blocage du dispositif automatique de commande des feux du véhicule, on dispose un thyristor 31 en parallèle sur la diode Zener 30. La gâchette de ce thyristor est reliée à la tension $V_B$ de la batterie par l'intermédiaire d'une résistance limitatrice 32 et d'un bouton-poussoir D, normalement ouvert. Lorsque le bouton-poussoir D est poussé, une impulsion positive de tension est appliquée à la gâchette du thyristor 31, rendant celui-ci conducteur, ce qui court-circuite la diode Zener 30 et amène la tension $V_A$ à la masse. Les circuits 1, 2 et 3 et les cellules 5, 6 et 7 ne sont donc plus alimentés et ne peuvent plus commander les relais 9, 10 et 11 par l'intermédiaire du circuit logique 8. Le fonctionnement automatique du dispositif est donc totalement bloqué et seul le fonctionnement purement manuel est alors possible.

Le collecteur du transistor 28 est de préférence relié à la batterie par l'intermédiaire de la clé de contact de manière que le fonctionnement automatique soit automatiquement rétabli lorsque le contact est remis après arrêt du véhicule. En effet, dès que la tension appliquée au collecteur, donc au thyristor 31, disparaît (contact du véhicule coupé), le thyristor n'est plus conducteur et il ne redeviendra conducteur que lorsqu'une nouvelle impulsion sera appliquée sur sa gâchette par l'intermédiaire du bouton-poussoir D. En effet, supposons que le bouton-poussoir ayant été poussé, l'automatisme soit bloqué, lorsque le véhicule est arrêté la tension $V_B$ n'est plus appliquée au thyristor 31. Lors d'un redémarrage le thyristor n'est plus conducteur et l'automatisme est de nouveau prêt à fonctionner.

Ainsi le dispositif automatique de commande de l'éclairage du véhicule est mis en fonctionnement par l'intermédiaire de la clé de contact. Cependant afin d'éviter de trop décharger la batterie au démarrage on a prévu d'empêcher l'allumage des feux de route et de croisement pendant tout le temps nécessaire au démarrage du véhicule. Ainsi, lorsque la clé de contact est tournée, seuls les feux de position s'allument si l'obscurité est suffisante et les feux de route ou de croisement ne peuvent s'allumer qu'après démarrage.

Les figures 3 et 4 représentent deux modes de réalisation possibles permettant ce blocage des feux de croisement et de route lors du démarrage.

Sur la figure 3, on a représenté deux commutateurs 33 et 34 qui existent normalement sur toutes les voitures et sont commandés simultanément par la clé de contact. Les points communs 33a et 34a de ces commutateurs sont reliés à la batterie et reçoivent donc la tension $V_B$. Le commutateur 33 comporte trois positions 33b, 33c, 33d. Dans la position 33d, le véhicule est à l'arrêt. Les contacts 33b et 33c sont reliés entre eux et à la bobine du véhicule, de sorte que celle-ci est alimentée dès que le contact est mis. Le contact 34b est relié au démarreur. Lorsque le commutateur 33 est sur la position 33b, le commutateur 34 est sur la position correspondante 34b dans laquelle la tension $V_B$ est appliquée au démarreur. Le commutateur 34 comporte un contact 34c qui est relié au point E représenté sur la figure 1. Ainsi, les relais 10 et 11 ne sont alimentés que lorsque le commutateur 34 est sur la position 34c, et non lors du démarrage pendant lequel le commutateur est sur la position 34d.

Dans le cas où ce contact 34c n'existerait pas sur un véhicule, il est néanmoins possible d'effectuer le blocage désiré lors du démarrage, par exemple en utilisant le mode de réalisation de la figure 4. Dans ce cas la borne E des relais est reliée directement à la tension $V_B$ de la batterie, mais le contact 34b du commutateur 34, qui est relié au démarreur, est relié à l'entrée de deux inverseurs 35 et 36 dont les sorties sont, respectivement, reliées aux sorties des circuits 2 et 3. Dans ce cas, lors du démarrage, l'entrée des inverseurs 35 et 36 étant positive, ceux-ci forcent à la masse les entrées du circuit 8 auxquelles sont appliqués les signaux $I_2$ et $I_3$ et empêchent ainsi tout allumage des feux de croisement et de route.

On a vu précédemment que les trois circuits de commande 1, 2, 3 étaient identiques, mais que seul le circuit 1 était représenté sur la figure 1.

On se référera maintenant à la figure 5 qui représente à plus grande échelle le circuit de commande 3. Pour ne pas surcharger inutilement les dessins, les éléments constitutifs du circuit logique de commande 8 n'ont pas été représentés, seuls les signaux d'entrée $I_1$, $I_2$, $I_3$, $I_4$ et $I_5$ ont été schématisés ainsi que les signaux de sortie vers les relais 9, 10 et 11.

On rappellera que chaque circuit de commande 1, 2, 3, et plus particulièrement le circuit de commande 3, comporte un amplificateur opérationnel 4 dont l'entrée inverseuse — est reliée à l'organe photosensible associé, 7 en l'occurrence, et dont l'entrée non inverseuse + est reliée à une tension de référence prenant deux valeurs différentes en fonction de la tension de sortie de l'amplificateur 4. A cet effet, cette entrée non inverseuse de l'amplificateur 4 est reliée à la tension d'alimentation $V_A$ par une première résistance $R_1$, à la masse par une seconde résistance $R_2$ et à la sortie de l'amplificateur 4 par une troisième résistance $R_4$.

Lorsque le dispositif se trouve en position de fonctionnement totalement automatique, chaque circuit de commande 1, 2, 3 et plus particulièrement les circuits 2 et 3, produisent un signal d'allumage des feux correspondants lorsque la luminosité descend au-dessous d'un premier seuil et un signal d'extinction lorsque la luminosité remonte au-dessus d'un second seuil, supérieur au premier.

L'expérience montre que si un véhicule muni d'un tel dispositif de commande en position totalement automatique et en éclairage de route rencontre des sources lumineuses parasites engendrées par exemple par des fenêtres éclairées, des murs blancs, des rails de guidage dans des virages, des catadioptres, des panneaux réflecteurs etc., la lumière des phares dudit véhicule va se réfléchir sur les systèmes réfléchissants et l'organe photosensible 7 va interpréter l'augmentation de luminosité soudaine comme le croisement d'un autre véhicule et provoquer l'extinction des phares et l'allumage des codes ou feux de croisement.

Dès l'extinction des phares, il n'y a plus de lumière réfléchie et le système provoque l'extinction des codes et l'allumage des phares d'où résulte un clignotement intempestif et gênant pour le conducteur durant le laps de temps où le véhicule se trouve dans ces conditions de circulation.

Il y a lieu de noter que ce phénomène ne se produit pas avec les feux de position en raison de la faible puissance de la lumière émise et qu'il n'est pas important avec les feux de croisement en raison de la valeur importante de l'hystérésis électrique entre les deux seuils correspondant à l'allumage et à l'extinction desdits feux de croisement.

En feux de route, le phénomène est plus accentué et plus fastidieux. Il se produit principalement dans les virages, sur les routes étroites comportant des obstacles réfléchissants comme les rails de protection, les grands murs blancs, les catadioptres, etc. ou en présence, même sur les grandes voies de circulation, de panneaux réfléchissants de très grandes dimensions.

Le dispositif de contrôle de lumière réfléchie qui est combiné avec le circuit de commande 3 des feux de route, conformément à la présente invention, permet d'éliminer totalement ce phénomène de clignotement intempestif.

Sur la figure 5, on retrouve, à plus grande échelle, le circuit de commande 3 des feux de route analogue à celui décrit précédemment en référence à la figure 1. Il fonctionne rigoureusement de la même façon et on ne le décrira pas de nouveau.

On va voir maintenant comment il est possible de rendre ce dispositif automatique insensible au phénomène de clignotement exposé précédemment, et dû à la réflexion de la lumière engendrée par les propres phares du véhicule et qui serait interprétée par la cellule photosensible comme la source lumineuse d'un autre véhicule ou comme une illumination importante sur la route, grâce à l'adjonction d'un système de contrôle de lumière réfléchie.

D'une façon générale, le système de contrôle de lumière réfléchie selon l'invention est constitué de deux éléments de base, à savoir :

a) un émetteur de radiations de préférence non visibles telles que des infrarouges, lesquelles radiations sont modulées dans le temps ;

b) un récepteur sensible uniquement aux radiations émises par l'émetteur.

Suivant une autre caractéristique de l'invention, l'émetteur est d'un type directif et est mis en position sur le véhicule de manière à couvrir sensiblement le même arc que celui des phares du véhicule, tandis que le récepteur est mis en position sur le véhicule pour qu'il soit à l'ombre de l'émetteur, c'est-à-dire qu'il n'y ait pas de contact optique direct entre émetteur et récepteur.

De cette façon, le récepteur est sensible uniquement à la quantité de radiations émises par l'émetteur, qui sont réfléchies par les obstacles qui se présentent au fur et à mesure du déplacement du véhicule sur la route.

Bien évidemment, le circuit récepteur est agencé de telle manière qu'il soit sensible seulement aux radiations émises par son propre émetteur, ceci afin que si une autre voiture équipée avec un système analogue se présente en face, les radiations émises par les deux véhicules n'interfèrent pas entre elles.

Compte tenu de ce qui précède on voit que le récepteur fournira, à sa sortie, une tension qui peut être :

soit proportionnelle à la quantité de radiations réfléchies ;

soit présente uniquement lorsque la quantité de radiations réfléchies dépasse une certaine valeur préétablie.

Si l'on se réfère maintenant à la figure 5, on y a schématisé l'émetteur de radiations infrarouges en 37 et le récepteur y associé en 38.

A titre d'exemple, on a également schématisé en 37$_A$ une émission de radiations modulées en amplitude et en fréquence, et en 38$_A$ la quantité de radiations réfléchies par un obstacle quelconque 39 et reçues par le récepteur 38.

Ce dernier délivre à sa sortie une tension qui, comme on l'a vu précédemment est soit proportionnelle à la quantité de radiations réfléchies, soit présente lorsque la quantité de radiations réfléchies dépasse une valeur préétablie.

Conformément à l'invention, il est possible d'agir sur le système d'allumage automatique de deux façons différentes.

Plus précisément, avec une tension proportionnelle à la quantité de radiations réfléchies, il est possible, en agissant sur la tension du comparateur 4, d'augmenter graduellement la quantité nécessaire de lumière pour éteindre les phares.

Avec la tension dépassant une valeur préétablie, il est possible de changer instantanément le seuil d'extinction des phares, en présence d'obstacles réfléchissants.

Conformément à l'invention, on agit sur la tension de référence du comparateur 4 en appliquant la tension éventuellement émise par le récepteur au terminal VR d'une résistance R$_5$ reliée à l'entrée non inverseuse + de l'amplificateur 4 par une diode 40.

Il est facile de voir comment une tension positive émise au terminal VR de la résistance R$_5$ peut, en traversant la diode 40, changer la tension de référence du comparateur 4 qui détermine le seuil d'allumage et d'extinction des phares.

Etant donné que le circuit du récepteur 38 est mis en fonction seulement lorsque les phares sont allumés, il en résulte que, en pratique, la tension du comparateur 4 ne vient à varier que pour la seule extinction. Il est à remarquer, en effet, que la tension du seuil qui détermine l'allumage n'est pas influencée par le manque de tension en VR.

L'émetteur 37 et le récepteur 38 sont synchronisés par tout moyen connu approprié de façon que les radiations perçues par le récepteur en un moment autre que celui où l'émetteur émet, soient interprétées comme provenant d'une autre source que l'émetteur et provoquent le blocage du signal qui devrait faire varier le seuil d'extinction de l'automatisme.

On a représenté sur la figure 5 un circuit d'insensibilisation aux autres émetteurs, lequel comprend un comparateur 41 qui a pour but d'empêcher le fonctionnement de l'indicateur de radiations réfléchies lorsque ce dernier capte l'émission d'autres voitures. A cet effet, le signal capté par le récepteur 38 est appliqué à l'entrée 42 du comparateur tandis que le signal émis par l'émetteur 37 est appliqué à l'entrée 43 dudit comparateur.

Il ressort à la lecture du dessin que si la tension devient positive à l'entrée 43 du comparateur en un temps égal à celui où la tension appliquée à l'entrée 42 devient positive à la sortie 44 du comparateur, elle s'y maintiendra positive et le système de contrôle pourra fonctionner.

Si, par contre, la tension à l'entrée 43 devient positive en un temps pendant lequel la tension appliquée à l'entrée 42 ne l'est pas, la sortie 44 du comparateur devient basse (à la masse) ce qui a pour effet de dévier, par l'intermédiaire d'une diode 45, la tension VR à la masse et, par conséquent, d'empêcher celle-ci d'agir sur la tension de référence du comparateur 4 de l'ensemble automatique d'allumage et d'extinction.

Etant donné que les probabilités pour que deux voitures se croisant émettent leurs radiations modulées, soit avec la même fréquence et si, avec la même fréquence, l'émettent avec la même phase sont pratiquement nulles, la marge de sécurité du système de contrôle selon l'invention est pratiquement infinie.

Par ailleurs, il est important de noter que les radiations infrarouges perçant le brouillard, il est possible d'appliquer le système avec des phares anti-brouillard. En effet, le récepteur peut dans ce dernier cas être branché, par un simple contact, avec un dispositif avertisseur acoustique, visuel ou optique qui aura l'avantage particulièrement appréciable de prévenir le conducteur que le véhicule approche éventuellement d'un obstacle tel qu'un autre véhicule, ce qui augmente la sécurité dans des proportions considérables.

Bien entendu un tel système avertisseur peut être conservé dans le fonctionnement normal aux fins de prévenir toute distraction éventuelle du conducteur.

**Revendications**

1. Dispositif de commande automatique de l'allumage et de l'extinction des feux d'un véhicule comportant au moins deux organes photosensibles (6, 7) reliés, respectivement, à deux circuits de commande (2, 3) définissant des seuils de luminosité et produisant, en fonction de la luminosité ambiante, des signaux de commande et un circuit logique de commande (8) dont les entrées reçoivent au moins lesdits signaux de commande et dont les sorties sont reliées au moins aux feux de croisement (16) et de route (17), caractérisé en ce que :

— d'une part, il comprend un troisième organe photosensible (5) relié à un circuit de commande (1) définissant au moins un seuil de luminosité et produisant, en fonction de la luminosité ambiante, un signal de commande qui agit, par l'intermédiaire du circuit logique de commande (8), sur les feux de position (15), ledit circuit logique de commande (8) présentant à cet effet des première, seconde et troisième entrées sur lesquelles sont respectivement appliqués les signaux de commande et des première, seconde et troisième sortie respectivement reliées aux feux de position (15), de croisement (16) et de route (17) par l'intermédiaire de trois relais (9, 10, 11) dont les contacts (12, 13, 14) normalement ouverts relient, respectivement, les feux de position (15), de croisement (16) et de route (17) à la batterie ($V_B$) ;

— et, d'autre part, est connecté en parallèle sur une commande manuelle (25) constituée par un interrupteur (26) monté en série avec la batterie ($V_B$) et un commutateur (27) à trois positions (27b, 27c, 27d), le point commun (27a) audit interrupteur (26) et audit commutateur (27) étant relié aux feux de position (15), les seconde et troisième positions (27c, 27d) du commutateur (27) étant reliées, respectivement, aux feux de croisement (16) et de route (17), afin de permettre : un fonctionnement totalement automatique lorsque l'interrupteur (26) est ouvert et que le commutateur (27) est dans la première position (27b) ; un fonctionnement manuel lorsque l'interrupteur (26) est fermé ; et en fonctionnement semi-manuel lorsque l'interrupteur (26) est ouvert et que le commutateur (27) est dans la seconde ou troisième position (27b, 27c).

2. Dispositif selon la revendication 1, caractérisé en ce que chaque circuit de commande (1, 2, 3) comporte un amplificateur opérationnel (4) dont l'entrée inverseuse est reliée à l'organe photosensible associé (5, 6, 7) et dont l'entrée non inverseuse est reliée à une tension de référence prenant deux valeurs différentes en fonction de la tension de sortie de l'amplificateur afin de produire un signal d'allumage des feux correspondants lorsque la luminosité descend au-dessous d'un premier seuil et un signal d'extinction lorsque la luminosité remonte au-dessus d'un second seuil, supérieur au premier.

3. Dispositif selon la revendication 2, caractérisé en ce que, dans chaque circuit de commande, l'entrée non inverseuse de l'amplificateur opérationnel (4) est reliée à la tension d'alimentation ($V_A$) par une première résistance (R1), à la masse par une seconde résistance (R2) et à la sortie de l'amplificateur par une troisième résistance (R4).

4. Dispositif selon l'une quelconque des revendications 1 à 3, caractérisé en ce que le circuit logique de commande (8) comporte une quatrième entrée reliée aux feux de croisement (16) et à la position correspondante (27c) du levier manuel, et une cinquième entrée reliée aux feux de route (17) et à la position correspondante (27d) du levier manuel, un signal ($I_4$) appliqué sur la quatrième entrée étant prioritaire par rapport à un signal ($I_3$) appliqué sur la troisième entrée reliée au circuit de commande (3) des feux de route et un signal ($I_5$) appliqué sur la cinquième entrée étant prioritaire par rapport à un signal ($I_2$) appliqué sur la seconde entrée reliée au circuit de commande (2) des feux de croisement.

5. Dispositif selon la revendication 4, caractérisé en ce que le circuit logique de commande (8) comporte un premier inverseur (18) reliant sa première entrée ($I_1$) au relais (9) de commande des feux de position, un second inverseur (19) reliant sa seconde entrée ($I_2$) au relais (10) de commande des feux de croisement, un troisième inverseur (20) reliant sa troisième entrée ($I_3$) au relais (11) de commande des feux de route, un quatrième inverseur (21) reliant sa quatrième entrée ($I_4$) à l'entrée du troisième inverseur (20), un cinquième inverseur (22) reliant sa cinquième entrée ($I_5$) à l'entrée du second inverseur (19), et un sixième inverseur reliant ses seconde ($I_2$) et troisième ($I_3$) entrées, une résistance (24) étant disposée entre sa troisième entrée ($I_3$) et l'entrée du troisième inverseur (20).

6. Dispositif selon l'une quelconque des revendications 1 à 5, caractérisé en ce qu'il est commandé par la clé de contact du véhicule.

7. Dispositif selon la revendication 6, caractérisé en ce que l'éclairage des feux de croisement et de route est bloqué pendant l'actionnement du démarreur du véhicule.

8. Dispositif selon l'une quelconque des revendications 1 à 7, caractérisé en ce qu'il comporte un circuit d'alimentation dont la sortie est à la masse tant que la clé de contact du véhicule n'est pas actionnée, le circuit d'alimentation comportant des moyens permettant de mettre hors service le dispositif automatique.

9. Dispositif selon la revendication 8, caractérisé en ce que lesdits moyens comportent un thyristor (31) dont la gâchette est reliée à la batterie par un bouton-poussoir (D) normalement ouvert, le thyristor étant connecté de manière à mettre à la masse la tension d'alimentation ($V_A$) lorsqu'il est conducteur.

10. Dispositif selon l'une quelconque des revendications 1 à 9, caractérisé en ce qu'est combiné au circuit de commande automatique (3) des feux de route, un système de contrôle de lumière réfléchie comprenant : un émetteur (37) de radiations de préférence non visibles telles que des radiations infrarouges, lesquelles sont modulées (37A) ; et un récepteur (38) sensible uniquement aux radiations de l'émetteur (37) qui sont réfléchies (38A) par les obstacles (39) qui se présentent au fur et à mesure du déplacement du véhicule, ledit récepteur (38) étant agencé pour délivrer un signal, fonction de la quantité de radiations réfléchies, ledit signal étant appliqué, par l'intermédiaire d'une entrée résistance ($R_5$) diode (40), au dispositif de commande (3) pour faire varier aussi longtemps que ledit signal est positif, la tension de référence (+) du comparateur (4) qui détermine les seuils d'allumage et d'extinction des feux de route, grâce à quoi le phénomène de clignotement intempestif des feux de route dû à la réflexion de la lumière générée par les propres feux de route du véhicule est totalement éliminé.

11. Dispositif selon la revendication 10, caractérisé en ce que le signal capté par le récepteur (38) est appliqué à une entrée (42) d'un comparateur (41) dont l'autre entrée (43) reçoit le signal émis par l'émetteur (37), la sortie (44) dudit comparateur délivrant un signal de sortie positif si les signaux appliqués aux entrées du comparateur sont bien identiques dans le temps et un signal de sortie négatif si les signaux d'entrée ne sont pas identiques dans le temps, ledit signal de sortie (44) étant appliqué par l'intermédiaire d'une diode (45) en amont de la diode (40), grâce à quoi le système de contrôle de lumière réfléchie ne fonctionne que si la lumière réfléchie est bien celle de son propre émetteur.

12. Dispositif selon l'une quelconque des revendications 10 ou 11, caractérisé en ce que l'émetteur (37) est d'un type directif et est mis en position sur le véhicule de manière à couvrir sensiblement le même arc que celui des feux de route du véhicule, tandis que le récepteur (38) est mis en position sur le véhicule pour ne pas recevoir de radiations directes de l'émetteur.

13. Dispositif selon l'une quelconque des revendications 10, 11 ou 12, caractérisé en ce que l'on branche sur le système de contrôle de lumière réfléchie, par l'intermédiaire d'un contact approprié, un dispositif acoustique visuel ou optique, qui fonctionne en même temps que ledit système de contrôle de lumière et augmente la marge de sécurité, plus particulièrement par temps de brouillard.

## Claims

1. A control device for automatically switching on and off the lights of a vehicle, comprising at least two photosensitive members (6, 7) respectively connected to two control circuits (2, 3) defining luminosity thresholds and producing control signals as a function of the ambient luminosity and a logic control circuit (8) the inputs of which receive at least said control signals and the outputs of which are connected at least to the lower beamlights (16) and upper beamlights (17), characterized in that :
— on the one hand, it comprises a third photosensitive member (5) connected to a control circuit (1) defining at least one luminosity threshold and producing, as a function of the ambient luminosity, a control signal which acts upon the position lights (15) through the logic control circuit (8), said logic control circuit (8) comprising to this end first, second, and third inputs to which the control signals are respectively applied and first, second and third outputs respectively connected to the position lights (15), lower beamlights (16) and upper beamlights (17), through three relays (9, 10, 11), the normally open contacts (12, 13, 14) of which respectively connect the position lights (15), the lower beamlights (16) and upper beamlights (17) to the battery ($V_B$) ;
— and, on the other hand, it is connected in parallel connection to a manual control (25) consisting of a switch (26) mounted in series connection with the battery ($V_B$) and a switch (27) with three positions (27b, 27c, 27d), the common point (27a) of said switch (26) and said switch (27) being connected to the position lights (15), the second and third position (27c, 27d) of the switch (27) being respectively connected to the lower beamlights (16) and the upper beamlights (17), so as to permit ; totally automatic operation when the switch (26) is open, and the switch (27) is in the first position (27b) ; manual operation when the switch (26) is closed ; and half-manual operation when the switch (26) is open and the switch (27) is in the second or third position (27b, 27c).

2. A device according to claim 1, characterized in that each control circuit (1, 2, 3) comprises an operational amplifier (4) the reversing input of which is connected to the associated photosensitive member (5, 6, 7) and the non-reversing input of which is connected to a reference voltage taking two different values depending on the output voltage of the amplifier to produce a signal for switching on the corresponding lights when luminosity decreases below a first threshold and a switch off signal when luminosity increases above a second threshold higher than the first.

3. A device according to claim 2, characterized in that in each control circuit the non-reversing input of the operational amplifier (4) is connected to the supply voltage ($V_A$) through a first resistance (R1), to the ground through a second resistance (R2) and to the output of the amplifier through a third resistance (R4).

4. A device according to any one of claims 1 to 3, characterized in that the logic control circuit (8) comprises a fourth input connected to the lower beamlights (16) and to the corresponding position (27c) of the manual lever, and a fifth input connected to the upper beamlights (17) and to the corresponding position (27d) of the manual lever, a signal ($I_4$) applied to the fourth input having priority over a signal ($I_3$) applied to the third input connected to the control circuit (3) of the upper beamlights and a signal ($I_5$) applied to the fifth input having priority over a signal ($I_2$) applied to the second input connected to the control circuit (2) of the lower beamlights (5).

5. A device according to claim 4, characterized in that the logic control circuit (8) comprises a first reverser (18) connecting its first input ($I_1$) to the relay (9) for controlling the position lights, a second reverser (19) connecting its second input

($I_2$) to the relay (10) for controlling the lower beamlights, a third reverser (20) connecting its third input ($I_3$) to the relay (11) for controlling the upper beamlights, a fourth reverser (21) connecting its fourth input ($I_4$) to the input of the third reverser (20), a fifth reverser (22) connecting its fifth input ($I_5$) to the input of the second reverser (19), and a sixth reverser connecting its second ($I_2$) and third ($I_3$) inputs, a resistance (24) being disposed between its third input ($I_3$) and the input to the third reverser (20).

6. A device according to any one of claims 1 to 5, characterized in that it is controlled by the ignition key of the vehicle.

7. A device according to claim 6, characterized in that the lower beamlights and the upper beamlights are inhibited during actuation of the vehicle starter motor.

8. A device according to any one of claims 1 to 7, characterized in that it comprises a power supply circuit the output of which is connected to ground as long as the vehicle ignition has not been switched on, the power supply circuit comprising means for switching off the automatic device.

9. A device according to claim 8, characterized in that said means comprise a thyristor (31) the gate of which is connected to the battery through a normally open push-button (D), the thyristor being connected so as to connect the power supply voltage ($V_A$) to ground when it is conductive.

10. A device according to any one of claims 1 to 9, characterized in that with the automatic control circuit (3) for the upper beamlights is combined a reflected light control system comprising a radiation transmitter (37), preferably for non visible, such as infrared, radiations, which are modulated (37A) ; and a receiver (38) only responsive to those radiations from the transmitter (37) which are reflected (38A) from obstacles (39) which are met as the vehicle moves on, said receiver (38) being adapted for supplying a signal depending on the quantity of reflected radiations, said signal being applied through a resistance ($R_5$) and diode (40) input to the control device (3) for varying, as long as said signal is positive, the reference voltage (+) of the comparator (4) which determines the switch on and switch off thresholds for the upper beamlights, thereby to totally eliminate inopportune blinking phenomena caused by reflection of light produced by the vehicle's upper beamlights themselves.

11. A device according to claim 10, characterized in that the signal picked up by the receiver (38) is applied to an input (42) of a comparator (41) the other input (43) of which receives the signal transmitted from the transmitter (37), the output (44) from said comparator supplying a positive output signal when signals supplied to the comparator inputs are actually equal as a function of time and a negative output signal when input signals are not identical as a function of time, said output signal (44) being applied through a diode (45) upstream of diode (40), whereby the reflective light control system works only if the reflected light is actually coming from its own transmitter.

12. A device according to any one of claims 10 or 11, characterized in that the transmitter (37) is of the directive type and is mounted to the vehicle so as to substantially sweep the same arc as that of the vehicle's upper beamlights, whereas the receiver (38) is disposed on the vehicle so as not to receive direct radiations from the transmitter.

13. A device according to any one of claims 10, 11 or 12, characterized in that through a suitable contact there is connected to the reflected light control system an acoustic, visual or optical device which is operated simultaneously with the light control system to enhance the safety margin, more especially, in foggy weather.

## Ansprüche

1. Vorrichtung zur automatischen Ein- und Ausschaltung der Lichter eines Fahrzeugs mit mindestens zwei lichtempfindlichen Organen (6, 7) die jeweils mit einem von zwei Steuerkreisen (2, 3) verbunden sind, die Helligkeitsschwellen festlegen und in Abhängigkeit von der Umgebungshelligkeit Steuersignale erzeugen, und einer logischen Steuerschaltung (8), deren Eingänge mindestens die Steuersignale empfangen und deren Ausgänge mindestens mit den Abblendlichtern (16) und Fernlichtern (17) verbunden sind, dadurch gekennzeichnet :
— dass sie einerseits ein drittes lichtempfindliches Organ (5) besitzt, das mit einem Steuerkreis (1) verbunden ist, der mindestens eine Helligkeitsschwelle bestimmt und in Abhängigkeit von der Umgebungshelligkeit ein Steuersignal erzeugt, das auf die Standlichter (15) über die logische Steuerschaltung (8) einwirkt, die zu diesem Zweck einen ersten, einen zweiten und einen dritten Eingang, an die die jeweiligen Steuersignale angelegt werden, und einen ersten, einen zweiten und einen dritten Ausgang besitzt, die mit den Standlichtern (15), den Abblendlichtern (16) bzw. den Fernlichtern (17) über drei Relais (9, 10, 11) verbunden sind, deren normalerweise offenen Kontakte (12, 13, 14) die Standlichter (15), die Abblendlichter (16) bzw. die Fernlichter (17) mit der Batterie ($V_B$) verbinden,
— und dass sie andererseits zu einer Handsteuerung (25) parallel geschaltet ist, die aus einem Unterbrecher (26) besteht, der mit der Batterie ($V_B$) und einem Umschalter (27) mit drei Positionen (27b, 27c, 27d) in Reihe geschaltet ist, wobei der gemeinsame Punkt (27a) des Unterbrechers (26) und des Umschalters (27) mit den Standlichtern (15) verbunden ist, und die zweite und die dritte Position (27c, 27d) des Umschalters (27) mit den Abblendlichtern (16) bzw. den Fernlichtern (17) verbunden sind, was einen vollautomatischen Betrieb, wenn der Unterbrecher (26) offen ist und der Umschalter (27) in der ersten Position (27b) ist, einen manuellen Betrieb, wenn der Unterbrecher (26) geschlossen ist und einen halbmanuellen Betrieb gestattet, wenn der Unterbrecher (26) offen ist und der Umschalter (27) sich in der zweiten oder dritten Position (27b, 27c) befindet.

2. Vorrichtung nach Anspruch 1, dadurch gekennzeichnet, dass jeder Steuerkreis (1, 2, 3) einen Operationsverstärker (4) besitzt, dessen umkehrender Eingang mit dem zugeordneten lichtempfindlichen Organ (5, 6, 7) und dessen nichtumkehrender Eingang mit einer Bezugsspannung verbunden ist, die in Abhängigkeit von der Ausgangsspannung des Verstärkers zwei verschiedene Werte annimmt, so dass, wenn die Helligkeit unter eine erste Schwelle sinkt, ein Signal zur Einschaltung der entsprechenden Lichter und, wenn die Helligkeit über eine zweite Schwelle, die über der ersten liegt, steigt, ein Signal zur Ausschaltung erzeugt wird.

3. Vorrichtung nach Anspruch 2, dadurch gekennzeichnet, daß in jedem Steuerkreis der nichtumkehrende Eingang des Operationsverstärkers (4) über einen ersten Widerstand (R1) mit der Speisespannung ($V_A$), über einen zweiten Widerstand (R2) mit der Masse und über einen dritten Widerstand (R4) mit dem Ausgang des Verstärkers verbunden ist.

4. Vorrichtung nach einem der vorhergehenden Ansprüche 1 bis 3, dadurch gekennzeichnet, daß die logische Steuerschaltung (8) einen vierten Eingang, der mit den Abblendlichtern (16) und der entsprechenden Position (27c) des Handhebels verbunden ist, und einen fünften Eingang besitzt, der mit den Fernlichtern (17) und der entsprechenden Position (27d) des Handhebels verbunden ist, daß ein an den vierten Eingang angelegtes Signal ($I_4$) bezüglich eines Signals ($I_3$) vorrangig ist, das an den dritten, mit dem Kreis (3) zur Steuerung der Fernlichter verbundenen Eingang angelegt wird, und daß ein an den fünften Eingang angelegtes Signal ($I_5$) bezüglich eines Signals ($I_2$) vorrangig ist, das an den zweiten, mit dem Kreis (2) zur Steuerung der Abblendlichter verbundenen Eingang angelegt ist.

5. Vorrichtung nach Anspruch 4, dadurch gekennzeichnet, daß die logische Steuerschaltung (8) ein erstes Umkehrorgan (18), das ihren ersten Eingang ($I_1$) mit dem Relais (9) zur Steuerung der Standlichter verbindet, ein zweites Umkehrorgan (19), das ihren zweiten Eingang ($I_2$) mit dem Relais (10) zur Steuerung der Abblendlichter verbindet, ein drittes Umkehrorgan (20), das ihren dritten Eingang ($I_3$) mit dem Relais (11) zur Steuerung der Fernlichter verbindet, ein viertes Umkehrorgan (21), das ihren vierten Eingang ($I_4$) mit dem Eingang des dritten Umkehrorgans (20) verbindet, ein fünftes Umkehrorgan (22), das ihren fünften Eingang ($I_5$) mit dem Eingang des zweiten Umkehrorgans (19) verbindet, und ein sechstes Umkehrorgan besitzt, das ihren zweiten und dritten Eingang ($I_2$, $I_3$) miteinander verbindet, wobei zwischen den dritten Eingang ($I_3$) und den Eingang des dritten Umkehrorgans (20) ein Widerstand (24) vorgesehen ist.

6. Vorrichtung nach einem der vorhergehenden Ansprüche, dadurch gekennzeichnet, daß sie durch den Zündschlüssel des Fahrzeugs gesteuert ist.

7. Vorrichtung nach Anspruch 6, dadurch gekennzeichnet, daß die Einschaltung der Fernlichter und Abblendlichter während der Betätigung des Anlassers des Fahrzeugs blockiert ist.

8. Vorrichtung nach einem der vorhergehenden Ansprüche, gekennzeichnet durch einen Speisekreis, dessen Ausgang mit der Masse verbunden ist, solange der Zündschlüssel des Fahrzeugs nicht betätigt ist, und der Einrichtungen zur Ausschaltung der automatischen Vorrichtung besitzt.

9. Vorrichtung nach Anspruch 8, dadurch gekennzeichnet, daß die Einrichtungen zur Ausschaltung der automatischen Vorrichtung einen Thyristor (31) besitzen, dessen Zündelektrode durch einen normalerweise offenen Druckknopf (D) mit der Batterie verbunden ist und der so geschaltet ist, daß die Speisespannung ($V_A$) mit der Masse verbunden ist, wenn er leitend ist.

10. Vorrichtung nach einem der vorhergehenden Ansprüche, dadurch gekennzeichnet, daß mit dem Kreis (3) zur automatischen Steuerung der Fernlichter ein System zur Überwachung des reflektierten Lichts kombiniert ist, das aus einem Sender (37), der vorzugsweise nicht sichtbare Strahlen, beispielsweise Infrarotstrahlen, die moduliert werden, sendet und einen Empfänger (38) besitzt, der ausschließlich für die Strahlen des Empfängers (37) empfindlich ist, die durch die bei der Fahrzeugbewegung auftretenden Hindernisse (39) reflektiert (38A) werden, und der so ausgebildet ist, daß er ein von der reflektierten Strahlungsmenge abhängiges Signal liefert, das über einen von einem Widerstand ($R_5$) und einer Diode (40) gebildeten Eingang an die Steuervorrichtung angelegt wird, so daß, solange das Signal positiv ist, die Bezugsspannung (+) des Vergleichers (4) geändert wird, die die Einschalt- und Ausschaltschwellen der Fernlichter bestimmt, wodurch die Erscheinung des ungewünschten Auf- und Abblinkens der Fernlichter infolge der Reflexion des von den eigenen Fernlichtern des Fahrzeugs erzeugten Lichtes vollständig ausgeschaltet wird.

11. Vorrichtung nach Anspruch 10, dadurch gekennzeichnet, daß das von dem Empfänger (38) aufgenommene Signal an einen Eingang (42) eines Vergleichers (41) angelegt ist, dessen anderer Eingang (43) das von dem Sender (37) gesendete Signal empfängt, und daß der Ausgang (44) des Vergleichers ein positives Ausgangssignal liefert, wenn die an die Eingänge des Vergleichers angelegten Signale zeitlich gleich sind, und ein negatives Ausgangssignal, wenn die Eingangssignale nicht zeitlich gleich sind, wobei das Ausgangssignal (44) über eine Diode (45) vor der Diode (40) angelegt ist, so daß das System zur Überwachung des reflektierten Lichts nur dann arbeitet, wenn das reflektierte Licht von dem eigenen Sender stammt.

12. Vorrichtung nach einem der Ansprüche 10 oder 11, dadurch gekennzeichnet, daß der Sender (37) eine Richtcharakteristik besitzt und an dem Fahrzeug so angebracht ist, daß er etwa denselben Kreisbogen wie die Fernlichter des Fahrzeugs bestreicht, während der Empfänger (38) an dem Fahrzeug so angebracht ist, daß er keine direkten Strahlen vom Sender empfängt.

13. Vorrichtung nach einem der Ansprüche 10, 11 oder 12, dadurch gekennzeichnet, daß an die Vorrichtung zur Überwachung des Lichts über einen geeigneten Kontakt eine akustische, visuelle oder optische Vorrichtung angeschlossen ist, die gleichzeitig mit dem System zur Überwachung des Lichts arbeitet und die Sicherheitsmarge insbesondere bei Nebel erhöht.

FIG.1

FIG.2

FIG.3

FIG.4

FIG.5

0 028 977